# EUROPEAN PATENT SPECIFICATION

(11) **EP 0 345 884 B1**
(45) Date of publication and mention of the grant of the patent: **12.04.1995**
(21) Application number: 89201412.7
(22) Date of filing: 05.06.1989
(51) Int. Cl.: B32B 7/06, B32B 27/18, E04C 2/54, B32B 3/12

(54) **Coextruded synthetic resin structures and a process for their manufacture**
Coextrudierte Kunstharzstrukturen und Verfahren zu ihrer Herstellung
Structures de résine synthétique coextrudées et procédé de leur fabrication

(30) Priority: 06.06.1988 NL 8801445
(43) Date of publication of application: 13.12.1989
(73) Proprietor: THE DOW CHEMICAL COMPANY, Midland Michigan 48640-1967 (US)
(72) Inventor: Haemhouts, Paul D.M., B-2050 Antwerpen (BE)
(74) Representative: Smulders, Theodorus A.H.J., Ir.

(56) References cited:
- EP-A- 0 110 221
- FR-A- 2 397 190

## Description

This invention relates to specific synthetic resin structures. According to the present invention a removable protective layer is coextruded with a base layer to protect the surface of the base layer during production, shipping and installation. At the same time the protective layer prevents the loss of any exudable additive(s) from said base layer. In a preferred embodiment, a coextruded, removable polyolefin film protects the surface of a twin-wall (hollow chamber-containing) polycarbonate sheet while maintaining the necessary high concentration of a relatively volatile UV stabilizer in the polycarbonate. Such additives can otherwise migrate to the surface and be lost while causing undesirable coating or plugging of the processing equipment.

In European patent applications 110 221 and 110 238 coextruded multilayer synthetic resin structures are described. In EP 110 221 a hollow polycarbonate core is coextruded with at least one polycarbonate surface layer containing a high concentration of an ultraviolet radiation ("UV") absorbant additive. In this way the damaging radiation is absorbed prior to further penetration into this structure. In EP 110 238 a hollow polycarbonate core is coextruded with an intermediate UV absorption layer containing a relatively high concentration of the relatively volatile UV absorbant. Simultaneously a covering layer is coextruded over the UV absorption layer which cover layer contains relatively low UV absorbant concentrations. In this system the cover layer is preferably a synthetic resin such as polymethylmethacrylate which does not require very much UV protection and is protected in any event by the volatile UV absorbant which will exude or migrate to the cover layer from the UV absorption layer.

As can be seen, the system of EP 110 238 reduces the loss of volatile UV absorbant which is encountered in the practice of EP 110 221. As mentioned in EP 110 238, the process of making these hollow sheet structures uses vacuum forming channels which maintain the shape of the hollow chambers by preventing the collapse of the thermoplastic resin before it cools and solidifies. The vacuum is created by a number of small pores which can become plugged by UV absorbant additive which exudes from the sheet unless the covering layer structure according to EP 110 238 is used.

However, the structures according to EP 110 238 have several disadvantages when using a covering layer of the prescribed UV resistant polymer such as polymethylmethacrylate. Among other things, the structure develops cracks in the covering layer if the structure is put under tension, for example by bending. This is due to the different flexural strengths of the thermoplastic resin layers. However, if the covering layer is prepared from a similar or identical polycarbonate resin containing reduced levels of the UV absorbant, the structure is not suitable for use unless there is sufficient migration of the UV absorbant from the high concentration layer underneath into and through the covering layer. Furthermore, in attempting to practice the technology of EP 110 238 with a covering layer of polycarbonate, it has been found to be difficult or impossible to control the thickness of the covering layer very precisely. As a result there is insufficient migration into and through the thick sections accompanied by excessive migration and plate out through the thin sections. In EP 110 221 the high concentration of UV absorbant is optimally located in the covering layer but, as mentioned above, is readily deposited on the processing equipment and especially the vacuum orifices of the forming channel.

After production, these hollow structures typically require a subsequent laminate application in order to protect the scratch-sensitive surface of the sheet during handling, shipping and installation. In EP-179,445 a removable film is temporarily applied via a lamination process to facilitate application of the non-removable protective resin layer to a sheet structure having hollow chambers. This can also be done by a lamination step with a film of polyethylene or other olefin polymer, if necessary, using an adhesive compound to achieve sufficient adhesion to the resin sheet. See for example EP 2 174 which is equivalent to U.S. 4,261,777.

In EP 138 194 (equivalent to U.S. 4,540,623) there are described coextruded polycarbonate laminate structures having a removable protective layer. However, the polycarbonate laminates described therein are not described as containing exudable levels of additives trapped in a base layer. Multiple layers of non-polycarbonate resins are additionally employed to maintain the strength of the sheet and reduce the need for relatively high concentrations (i.e. exudable levels) of stabilizing additives.

It is an object of the present invention to provide a synthetic resin structure wherein a necessarily high concentration of an exudable additive is not lost during production and subsequent handling but is still optimally located at the structure surface at the time the structure is used. It is a further objective to protect the processing equipment used for the preparation of such structures from deposits of the additive(s).

These and other objectives are achieved according to the present invention which is a synthetic resin sheet structure having (a) a base layer comprising (a.1) a layer containing at least one exudable additive and (a.2) at least one additional layer, not having exudable levels or types of additive(s). The resin sheet structure is characterized by having (b) a coextruded removable, protective synthetic resin film layer adjacent layer (a.1) and preventing release or loss of exudable additive until removal of layer (b). In a preferred embodiment, the base layer (a) comprises at least one exudable UV absorbant-containing layer (a.1) and hollow chambers. In a further aspect of this invention the resin sheet structure comprises (b) a coextruded removable, protective layer and (a) a base layer comprising (a.1) at least one polycarbonate resin layer containing exudable UV absorbing additive(s) and hollow chambers. The additional layer(s) (a.2) of the base layer preferably comprise a polycarbonate resin core layer having hollow chambers. In such a structure there are most preferably two UV absorbant-containing layers (a.1) on either side of the core layer (a.2), wherein exudable UV absorbing additive is located for maximized effect. Such a structure then has removable protective layers (b) on both outermost surfaces of the resultant structure.

In a further embodiment, the present invention is a process for preparing a synthetic resin sheet structure having (a) a base layer comprising (a.1) a layer containing at least one exudable additive and (a.2) at least one additional layer, comprising the step of (i) coextruding at least one layer containing exudable additive(s) with at least one additional layer, characterized in that at least one removable protective synthetic resin film layer is coextruded with the base layer adjacent to the exudable additive-containing layer (a.1) such that, in combination with the additional layer (a.2), the additive(s) concentration in such layer (a.1) is maintained and the production equipment protected from exudable additive(s).

In another aspect, the process comprises the further steps of (ii) providing the extruded resin base layer (a) with one or more longitudinal hollow chambers and (iii) maintaining the size and shape of the hollow chambers during the resin cooling and hardening time by the use of a vacuum chamber with small vacuum orifices wherein the vacuum orifices are protected by the removable layer from becoming plugged with the additive(s).

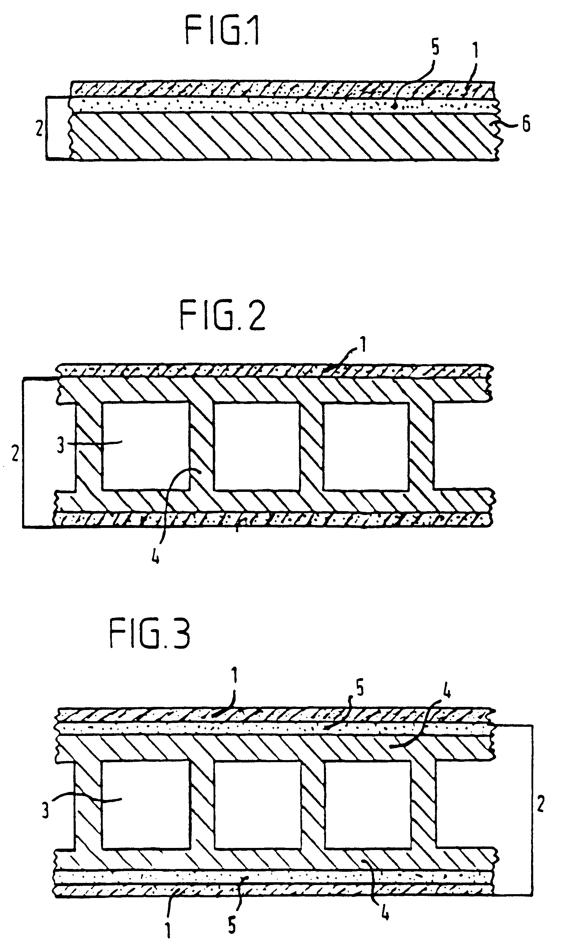

In the accompanying drawings, Figures 1, 2 and 3, there are shown cross sectional views (not necessarily in scale) of examples of multilayer synthetic resin sheet structures according to the present invention. In the embodiment of the invention which is shown in Figure 1 a synthetic resin sheet structure is shown having a removable protective layer 1 on a base layer 2. The base layer 2 comprises an exudable additive-containing layer 5 and an additional layer 6. In the structure shown in Figure 2 there are removable protective layers 1 on either side of a core layer. The core layer 4 has hollow chambers 3 and contains an exudable additive. In Figure 3 a structure is shown having as base layer 2 a core layer 4 having hollow chambers 3 and exudable additive-containing layers 5 on either side of the core layer. Adjacent to the exterior surfaces of both additive-containing layers 5 are two removable protective layers 1 making up the outermost surfaces of the structure.

Coextrusion processes and the necessary equipment are all well-known in the literature and need not be described in detail. See, for example, U.S. Patents 3,487,505; 3,315,306; 3,860,372; 3,485,912; and 3,557,265. It is preferable to use a feedblock coextrusion apparatus wherein the various layers which are desired to be incorporated are combined in a heat plastified form in a feedblock. The combined layers are then supplied to the sheet extrusion die having the appropriate dimensions.

Regarding the structure of sheet material prepared according to this invention, the base layers suitable for use in the present invention contain at least the exudable additive-containing layer and one additional layer. One function of the additional layer(s) is to keep the exudable additive(s) trapped between such additional layer and the removable protective layer. Within these limits a large number of combinations are, of course, possible depending on the intended use of the sheet structure. For example, in a three layer structure such as shown in Figure 2 a second removable protective layer can be used as additional layer. The sheet structures can be symmetrical groups of layers around a core or the layers can be ordered in such a way that the end use of the sheet structure requires a particular surface to be facing a certain direction, such as for example, on the exterior of a building. The base layer can advantageously have one or more additional layers that provide further desirable properties to the sheet structure.

As shown in Figure 3, a preferred embodiment of the present invention is a sheet structure with an innermost base layer 4 of polycarbonate with additive-containing layers 5 adjacent to both major surfaces of 4 and removable protective layers 1 adjacent to the other surfaces of layers 5.

For the practice of a preferred embodiment of this invention, the extrusion of one or more profiles to produce a base layer having longitudinal hollow cavities and/or a number of hollow chambers is generally known to those skilled in the art. See for example European patent applications 110 238, 110 221, and 118 683.

Regarding its composition, the base layer of the synthetic resin sheet thermoplastic structure can consist of at least two layers of extrudable synthetic resin(s). In general a number of known extrudable thermoplastic resins can be used to prepare the various layers of the sheet structure according to this invention. The base layer composition is selected to provide the basic combination of physical properties required for the resin sheet structure, such as transparency, rigidity, impact strength, chemical resistance, heat resistance, etc. The base layer can comprise one or more layers of a thermoplastic polymer resin based on (meth)acrylate monomers and/or monovinylidene aromatic monomers such as styrene, α-methyl styrenes and the ring-substituted styrenes such as one or more of the isomers of vinyl toluene, tertiarybutyl styrene, and/or one or more of the halogen substituted styrenes. This would include homopolymers and copolymers of these and copolymers with one or more additional copolymerizable monomers such as nitriles, and/or other polymerizable acids and/or derivatives.

Preferred thermoplastic resins for use as one or more layers in the base layer are the polycarbonate resins. Preferably a polycarbonate resin is used to prepare at least one layer. Most preferably it is used to prepare an innermost or core layer which has hollow sections. It is advantageous if any additional non-removable layers of the base layer are prepared from a similar polycarbonate resin and preferably the same polycarbonate resin. Preferably there is a polycarbonate resin core layer with a UV absorbant layer on both major surfaces thereof and each has a removable protective layer.

The polycarbonate resins which can be used in the base layer, are well-known to those skilled in the art. Such resins are usually derived from an aromatic bisphenol or from a mixture of such bisphenols and particularly from bisphenol A. The exact polycarbonate composition is not critical so long as a resin is selected which can be extruded into panels of high toughness and transparency. It is possible according to this invention to have a base layer comprising a polycarbonate layer section with a layer of one of the other extrudable homo or copolymers discussed above. It should be noted, however, that at least one polycarbonate layer is preferred and that such additional layers which are differing from the polycarbonate in terms of viscosity, flexural strength and tensile properties are not preferred due to the problems that can arise if the synthetic resin sheets are to be bent or stressed during their handling, installation or use.

For the purposes of this invention the term "exudable additive(s)" refers to compounds which are to be combined with a heat plastified thermoplastic resin but due to their volatility, composition and/or concentration migrate out of or are exuded from such resin at an inappropriate time during subsequent processing, forming, handling, shipping, storage and/or usage of the resin or part prepared therefrom. The additives and levels thereof where migration and/or exudation is a problem or is desired to be controlled are well-known and include, for example, UV absorbing additives, antistatic additives and ignition resisting additives. It is also possible to use such coextruded structures with removable protective layers to protect the inner layers which may contain for controlled release purposes some type of active ingredient(s) such as insecticides or fungicides.

Depending on the selection of additive(s), resin to which they are added, and the conditions of processing and use, problems with exuding, migration or plate out will start to occur at differing concentrations of additive(s). In the description of this invention it is to be understood that the coextruded removable protective layer(s), in connection with the removable or non-removable additional layer on the other side, are selected to avoid or control such problems. In view of this it can be seen that such removable protective layers and additional layers can simultaneously contain types and/or levels of additives which do not present migration or exudation problems.

While generally having application to these and other situations, this invention is preferably applied to the UV absorbing additives used at the levels necessary to protect polycarbonate resins in outdoor applications. Depending on the efficiency of the specific UV absorbant which is selected, the content of UV absorbant in the base layer should be at least 0.4 grams of UV absorbant material per square meter (g/m²) for the conventional UV absorbants for plastics. In general, this requires UV absorbant concentration ranges of at least 0.5 weight percent. Normally, for other applications, UV absorbants are employed at levels of up to about 0.3 weight percent and/or UV absorbants having lower volatility are used. However, it has been found that UV absorbants will begin to exude and/or migrate excessively causing plate out problems at levels in excess of about 0.3 weight percent.

Obviously, the UV absorbant is most effective when employed in even higher concentration in a layer that is located between the major thickness of the resin sheet and the source of the UV. Virtually all of the UV is then absorbed very close to the layer surface and is not passing through any significant thickness of the polymer. The additional layer(s), since protected by such a covering UV absorbant layer, then require little or no UV absorber, which additives can reduce the physical properties of the resin. When the absorbant concentration needs to be raised in this way the plate out problem from such covering UV absorbant layer is magnified accordingly.

In the case where it is dispersed throughout the base layer, the UV absorbant concentration should typically be from 0.5 to 5 weight percent based on the resin weight. When used as described above in higher concentrations to provide a UV absorbant surface layer for the resin sheet the UV absorbant concentration is greater than 0.5 weight percent, preferably greater than 2 weight percent and most preferably in the range of 2 to 15 weight percent.

Suitable UV absorbers are the benzotriazoles and derivatives such as 2-(2′-hydroxy-5′-methylphenyl)-benzotriazole and 2-(3′,5′-bis-(1-methyl-1-phenylethyl)-2′-hydroxyphenyl) benzotriazole; the 2-hydroxybenzophenones and derivatives such as 2-hydroxy-4-n-octoxybenzophenone and 2-hydroxy-4-methoxybenzophenone; the dicyanoacrylates such as ethyl-2-cyano-3,3-diphenylacrylate and 2-ethylhexyl-2-cyano-3,3-diphenyl acrylate; and the benzalphthalides as well as the less preferred alternatives 2,4-dihydroxybenzoylfuran, phenylsalicylate, resorcinol disalicylate, resorcinol monobenzoate and dibenzoate, benzyl benzoate, stilbene, and betamethylumbelliferone and its benzoate. Many other UV absorbers are known and commercially available. The UV absorber should be selected to be homogeneously miscible with the appropriate plastic material in which it will be dispersed at the necessary concentrations. The benzotriazole and 2-hydroxybenzophenone stabilizers and derivatives are preferred and the benzotriazole stabilizers and derivativeas are particularly preferred for the practice of this invention with polycarbonate resins but otherwise exhibit severe problems with excessive volatilization or exudation at polycarbonate processing temperatures.

In the preparation of the base layer, the selected combinations of layers and profiles should be extruded to achieve a synthetic resin sheet thickness of up to 100 millimeters (including any hollow chambers). Preferably such base layer will have a thickness in the range of 3 to 65 millimeters and preferably from 4 to 20 millimeters. These sheet structures are generally continuously extruded and are cut to the desired length. Generally such sheets will have length and/or width dimensions on the order of 0.5 to 6 meters, depending upon the extrusion equipment available and the intended use of the resin sheet.

As shown in the figures, the exudable UV absorbing additive can advantageously be employed in a layer which, upon removal of the removable protective layer, is the surface or exterior layer of the resin sheet structure. In a structure of this type little or no additive is required in interior or lower layers. Upon removal of the protective layer(s) an effective additive concentration is obtained on one or both surfaces. For UV absorption purposes the layer and its concentration of UV absorbant should be sufficient to absorb 90 percent and preferably at least 99 percent of unreflected UV (wave lengths between 280 and 380 millimeters) perpendicularly incident thereon. In general, a polycarbonate layer of this type with a relatively high UV absorbant concentration should have a thickness ranging from 5 to 100 micrometers (»m) and preferably from 5 to 50 »m.

The removable protective layer which is coextruded with the hollow, base layer needs to be selected so that it (a) provides the necessary protection of the extruded sheet structure during production, handling and installation; (b) protects the sheet production equipment from deposits of exuded UV absorbant materials; (c) possesses sufficient adhesion to the resin sheet during the vacuum section and subsequent handling; and (d) is sufficiently incompatible with the surface of the base layer to be removable (peelable) from the sheet at the appropriate time. It has been found that polyolefin resins offer the necessary combinations of polymer composition and physical strength properties that are required for this application.

It is interesting to note that the known processes for production of synthetic resin sheets of the type discussed herein, including polycarbonate resin sheets, can include the subsequent lamination with a protective film layer using an adhesive layer after the extrusion section. One of the advantages of the present invention is that such a step is no longer needed, nor is the supplemental adhesive. Another advantage over similar structures prepared via lamination or casting techniques is that the additives and/or additive-containing layer(s) are never in direct contact with the atmosphere or with subsequent handling or processing operations or equipment.

The olefin polymers suitable for use as a coextruded removable protective layer include low density polyethylene (LDPE), high density polyethylene (HDPE), linear low density polyethylene (LLDPE), polypropylene (PP) or polyamide (PA) with or without the typical fillers, release additives and/or adhesives known for use in these types of polymer films. The resin to be used for the coextruded removable layer should be selected to have a melt viscosity close to that of the base layer to make it easier to coextrude these layers. In view of these considerations, it is found to be preferable to use HDPE or LLDPE and especially types which are selected to have melt flow properties (e.g. melt index and melting point) that more closely match the melt index and melting point of the base layers typically used such as polycarbonate.

As used herein the terms LDPE, HDPE, LLDPE, PP and PA are generally known to those skilled in the art. See for example US Patent 4,690,376 regarding the definitions of HDPE (density of at least 0.94 grams per cubic centimeter), LDPE (density lower than 0.94 grams per cubic centimeter) and LLDPE (copolymer of ethylene with at least one additional α-olefin monomer). It has been found that for the production and use of the protected synthetic resin sheet, the thickness of the protective layer should be in the range of 25 to 250 »m. Preferably the thickness is in the range of 50 to 150 »m.

In the following experiment, a multilayer polycarbonate sheet with a removable olefin polymer protective layer is prepared. A polycarbonate resin with a melt index of 6 sold by The Dow Chemical Company under the registered trademark CALIBRE 302-6 (tm) is used to prepare a base layer. The polycarbonate resin is formulated to contain 5% by weight benzotriazole UV absorbant based on the weight of resin plus additive. The coextruded removable protective layer is prepared from an ethylene-octene copolymer LLDPE having a melt index of 2.5. A feed block coextrusion system is used wherein the base and removable protective layers are combined prior to the die and are fed to a sheet die having the appropriate profile. The melt temperatures are between 290 and 300°C and the LLDPE layer is coextruded on both sides of the base layer in a thickness of 70 »m. The extruded multilayer sheet is tested and the protective layer is found to be sufficiently adhered to the polycarbonate base layer to resist delamination. The protective layer is, however, easily removable in a single piece from the polycarbonate sheet. The coextrusion machinery is found to be essentially protected from the UV absorbant.

## Claims

1. A synthetic resin sheet structure having (a) a base layer comprising (a.1) an extrudable thermoplastic resin layer containing at least one exudable additive and (a.2) at least one additional layer not containing exudable additive(s), the resin sheet structure characterized by having (b) a coextruded removable, protective synthetic resin film layer adjacent layer (a.1) and preventing release or loss of exudable additive until removal of layer (b).

2. The sheet structure according to Claim 1 wherein the exudable additive concentration in layer (a.1) is greater than 0.5 weight percent and in layer (a.2) is less than 0.5 weight percent.

3. The sheet structure according to Claim 1 wherein the base layer (a) comprises at least one exudable UV absorbant-containing layer (a.1) and at least one additional layer (a.2) and layers (a.1) and (a.2) are both prepared from polycarbonate resin.

4. The sheet structure according to Claim 3 wherein the protective layer (b) is LLDPE or HDPE.

5. The sheet structure according to Claim 4 wherein the thickness of the removable protective layer (b) is from 50 to 150 micrometers.

6. The sheet structure according to Claim 2 wherein the exudable additive is at least 0.5 weight percent of a benzotriazole-derivative UV absorbant.

7. The sheet structure according to Claim 6 consisting essentially of an innermost base layer (a.2), additive-containing layers (a.1) adjacent to both major surfaces of (a.2) and removable protective layers (b) adjacent to the outer surfaces of layers (a.1).

8. The sheet structure according to Claim 1 wherein at least one additional layer (a.2) comprises hollow chambers.

9. A process for preparing a synthetic resin sheet structure having (a) a base layer comprising (a.1) a layer containing at least one exudable additive and (a.2) at least one additional layer, comprising the step of (i) coextruding at least one layer containing exudable additive(s) with at least one additional layer, characterized in that at least one removable protective synthetic resin film layer is coextruded with the base layer adjacent to the exudable additive-containing layer (a.1) such that, in combination with the additional layer (a.2), the additive(s) concentration in such layer (a.1) is maintained and the production equipment protected from exudable additive(s).

10. The process according to Claim 9 comprising the further steps of (ii) providing the extruded resin base layer (a) with one or more longitudinal hollow chambers and (iii) maintaining the size and shape of the hollow chambers during the resin cooling and hardening time by the use of a vacuum chamber with small vacuum orifices wherein the vacuum orifices are protected by the removable layer from becoming plugged with the additive(s).

11. The process according to Claim 10 wherein the hollow chambers are provided in a polycarbonate core layer (a.2), two exudable additive-containing layers (a.1) are coextruded on either side of the core layer, and removable protective layers are coextruded on both remaining surfaces of the additive-containing layers.

12. The process according to Claim 11 wherein the layers are coextruded from a feed block and supplied to a sheet extrusion die.

## Patentansprüche

1. Plattenstruktur aus Kunstharz, welche aufweist: (a) eine Basisschicht, umfassend (a.1) eine Schicht eines extrudierbaren thermoplastischen Harzes, die wenigstens einen exudierbaren Zusatzstoff enthält, und (a.2) wenigstens eine zusätzliche Schicht, die keine/n exudierbaren Zusatzstoffe/Zusatzstoff enthält, wobei die Harzplattenstruktur dadurch gekennzeichnet ist, daß sie (b) eine coextrudierte entfernbare Kunstharzfilm-Schutzschicht, angrenzend an die Schicht (a.1), aufweist, welche die Freisetzung oder den Verlust von exudierbarem Zusatzstoff bis zur Entfernung der Schicht (b) verhindert.

2. Plattenstruktur nach Anspruch 1, worin die Konzentration von exudierbarem Zusatzstoff in Schicht (a.1) größer als 0,5 Gew.-% ist, und in Schicht (a.2) weniger als 0,5 Gew.-% ist.

3. Plattenstruktur nach Anspruch 1, worin die Basisschicht (a) wenigstens eine exudierbaren UV-Absorber enthaltende Schicht (a.1) und wenigstens eine Zusätzliche Schicht (a.2) umfaßt, und wobei die Schichten (a.1) und (a.2) beide aus Polykarbonatharz hergestellt sind.

4. Plattenstruktur nach Anspruch 3, worin die Schutzschicht (b) LLDPE oder HDPE ist.

5. Plattenstruktur nach Anspruch 4, worin die Dicke der entfernbaren Schutzschicht (b) von 50 bis 150 »m beträgt.

6. Plattenstruktur nach Anspruch 2, worin der exudierbare Zusatzstoff wenigstens 0,5 Gew.-% eines Benzotriazolderivat-UV-Absorbers ist.

7. Plattenstruktur nach Anspruch 6, bestehend aus einer innenliegenden Basisschicht (a.2), Zusatzstoff enthaltenden Schichten (a.1) angrenzend an beide größeren Oberflächen von (a.2) und entfernbare Schutzschichten (b), angrenzend an die äußeren Oberflächen der Schichten (a.1)

8. Plattenstruktur nach Anspruch 1, worin wenigstens eine Zusatzschicht (a.2) Hohlkammern umfaßt.

9. Verfahren zur Herstellung einer Plattenstruktur aus Kunstharz, die (a) eine Basisschicht aufweist, welche (a.1) eine Schicht, die wenigstens einen exudierbaren Zusatzstoff enthält, und (a.2) wenigstens eine zusätzliche Schicht umfaßt, umfassend die Stufe (i) des Coextrudierens wenigstens einer exudierbare/n Zusatzstoffe/Zusatzstoff enthaltenden Schicht mit wenigstens einer zusätzlichen Schicht, dadurch gekennzeichnet, daß wenigstens eine entfernbare Kunstharzfilm-Schutzschicht mit der Basisschicht angrenzend an die exudierbaren Zusatzstoff enthaltende Schicht (a.1) derart coextrudiert wird, daß, in Kombination mit der zusätzlichen Schicht (a.2), die Konzentration von Zusatzstoff/en in einer solcher Schicht (a.1) beibehalten wird und die Herstellungsausrüstung vor exudierbarem/n Zusatzstoff/en geschützt wird.

10. Verfahren nach Anspruch 9, umfassend die weiteren Stufen von (ii) Bereitstellung der extrudierten Harzbasisschicht (a) mit einer oder mehreren longitudinalen Hohlkammern und (iii) Aufrechterhaltung der Größe und Gestalt der Hohlkammern während der Harzabkühlungs- und Härtungszeit durch Anwendung einer Vakuumkammer mit kleinen Vakuumöffnungen, worin die Vakuumöffnungen durch die entfernbare Schicht vor dem Verstopfen mit Zusatzstoff/en geschützt werden.

11. Verfahren nach Anspruch 10, worin die Hohlkammern in einer Polykarbonat-Kernschicht (a.2) bereitgestellt werden, zwei exudierbaren Zusatzstoff enthaltende Schichten (a.1) auf jeder Seite der Kernschicht coextrudiert werden, und entfernbare Schutzschichten auf beiden verbleibenden Oberflächen der Zusatzstoff enthaltenden Schichten coextrudiert werden.

12. Verfahren nach Anspruch 11, worin die Schichten aus einem Verteilerblock coextrudiert werden und zu einer Platten-Coextrusionsdüse geführt werden.

## Revendications

1. Structure en forme de feuille, en résine synthétique, présentant (a) une couche de base comprenant (a.1) une couche de résine thermoplastique extrudable, contenant au moins un additif exsudable, et (a.2) au moins une couche supplémentaire, ne contenant pas d'additif exsudable, la structure en forme de feuille, en résine, étant caractérisée par le fait qu'elle présente (b) une couche constituée d'un film de résine synthétique protectrice, coextrudée, ôtable, adjacente à la couche (a.1) et empêchant la libération ou la perte d'additif exsudable jusqu'à l'enlèvement de la couche (b).

2. Structure en forme de feuille selon la revendication 1, dans laquelle la concentration d'additif exsudable est supérieure à 0,5 % en poids dans la couche (a.1) et est inférieure à 0,5 % en poids dans la couche (a.2).

3. Structure en forme de feuille selon la revendication 1, dans laquelle la couche de base (a) comprend au moins une couche (a.1) contenant un agent absorbant les rayons UV, exsudable, et au moins une couche supplémentaire (a.2), et les couches (a.1) et (a.2) sont toutes deux préparées à partir d'une résine de polycarbonate.

4. Structure en forme de feuille selon la revendication 3, dans laquelle la couche protectrice (b) est constituée de LLDPE ou de HDPE.

5. Structure en forme de feuille selon la revendication 4, dans laquelle l'épaisseur de la couche protectrice ôtable (b) est de 50 à 150 micromètres.

6. Structure en forme de feuille selon la revendication 2, dans laquelle l'additif exsudable est constitué d'au moins 0,5 % en poids d'un dérivé du benzotriazole, absorbant les rayons UV.

7. Structure en forme de feuille selon la revendication 6, constituée essentiellement d'une couche de base (a.2), située le plus à l'intérieur, de couches (a.1) contenant de l'additif, adjacentes aux deux surfaces principales de (a.2), et de couches protectrices ôtables (b), adjacentes aux surfaces externes des couches (a.1).

8. Structure en forme de feuille selon la revendication 1, dans laquelle au moins une couche supplémentaire (a.2) comprend des espaces creux.

9. Procédé de préparation d'une structure en forme de feuille, en résine synthétique, présentant (a) une couche de base comprenant (a.1) une couche contenant au moins un additif exsudable et (a.2) au moins une couche supplémentaire, ledit procédé comprenant l'étape de (i) coextrusion d'au moins une couche contenant un ou plusieurs additifs exsudables, avec au moins une couche supplémentaire, caractérisé en ce qu'au moins une couche constituée d'un film de résine synthétique, protectrice, ôtable, est coextrudée avec la couche de base de manière à être adjacente à la couche contenant l'additif exsudable (a.1), de telle sorte que, par suite de la combinaison avec la couche supplémentaire (a.2), la concentration de l'additif ou des additifs dans une telle couche (a.1) est maintenue et l'équipement de production est protégé de l'additif exsudable ou des additifs exsudables.

10. Procédé selon la revendication 9, comprenant en outre les étapes consistant à (ii) munir la couche de base de résine extrudée (a) d'un ou plusieurs espaces creux longitudinaux, et (iii) maintenir la taille et la forme des espaces creux pendant la période de refroidissement et de durcissement de la résine, grâce à l'utilisation d'une chambre à vide, présentant de petits orifices à vide, la couche ôtable empêchant les orifices à vide d'être bouchés par le ou les additifs.

11. Procédé selon la revendication 10, dans lequel les espaces creux sont pratiqués dans une couche centrale (a.2) de polycarbonate, deux couches (a.1) contenant de l'additif exsudable sont coextrudées sur chaque côté de la couche centrale, et des couches protectrices ôtables sont coextrudées sur les deux surfaces restantes des couches contenant l'additif.

12. Procédé selon la revendication 11, dans lequel les couches sont coextrudées à partir d'un bloc d'alimentation et introduites dans une filière d'extrusion de feuille.
